**Europäisches Patentamt**

**European Patent Office**

**Office européen des brevets**

(19)

(11) Veröffentlichungsnummer: **0 258 468**
**B1**

(12) # EUROPÄISCHE PATENTSCHRIFT

(45) Veröffentlichungstag der Patentschrift:
**24.01.90**

(51) Int. Cl.⁴: **G01D 5/22**

(21) Anmeldenummer: **86111920.4**

(22) Anmeldetag: **28.08.86**

(54) **Verfahren zur induktiven Wegmessung und Wegsensor.**

(43) Veröffentlichungstag der Anmeldung:
**09.03.88 Patentblatt 88/10**

(45) Bekanntmachung des Hinweises auf die Patenterteilung:
**24.01.90 Patentblatt 90/4**

(84) Benannte Vertragsstaaten:
**CH DE FR GB IT LI SE**

(56) Entgegenhaltungen:
**EP-A- 0 028 971
DE-B- 1 302 206
FR-A- 2 509 466**

**MESURES; REGULATION; AUTOMATISME, Band 41,
Nr. 1/2, Januar-Februar 1976, Seiten 50-57, Paris, FR; H.
SCHAEVITZ et al.: "Les capteurs à transformateurs
différentiels"**

(73) Patentinhaber: **Vickers Systems GmbH,
Frölingstrasse 41, D-6380 Bad Homburg(DE)**

(72) Erfinder: **Ackermann, Emil, Ing. HTL,
Herrenbergstrasse 40, CH-9230 Flawil(CH)**
Erfinder: **Behlau, Hartmut, Dipl.-Ing. (TH),
Demutstrasse 7, CH-9000 St. Gallen(CH)**

(74) Vertreter: **Blumbach Weser Bergen Kramer Zwirner
Hoffmann Patentanwälte, Sonnenbergerstrasse 43,
D-6200 Wiesbaden 1(DE)**

## Beschreibung

Die Erfindung bezieht sich auf einen induktiven Wegsensor mit einer zylindrischen Spuleneinrichtung, mit einem permeablen Spulenkern als verschiebbarem Anker im Inneren der Spuleneinrichtung, mit einer Stromzuführungsanordnung, die einen Oszillator zur Abgabe von Wechselstrom bestimmter Frequenz an die Spuleneinrichtung enthält, und mit einer Meßanordnung, die das gemessene Signal gleichrichtet und zur Anzeige bringt.

Wegsensoren werden zur Erfassung der Stellbewegung von Ventilschiebern oder von Verstellkolben an Regelpumpen benutzt. Es kommen Hübe oder Verschiebewege von ± 1 bis ± 20 mm in der Praxis vor. Die Geräte arbeiten aufgrund der variablen Induktivität einer Spuleneinrichtung infolge eines Spulenkerns, wobei die Spule als Differentialtransformator oder als Differentialdrossel ausgebildet sein kann (siehe beispielsweise DE-B 1 302 206). Beim Differentialtransformator ändern sich die Sekundärspannungen gegenläufig zur Verschiebung des Spulenkerns, wobei die Differenzspannung in der Mittelstellung des Spulenkerns Null ist und für einen gewissen Bereich proportional zum Verschiebeweg des Spulenkerns aus der Null-Lage ist. Die Differentialdrossel ist ein Spannungsteiler, dessen mittlerer Spulenanschluß die Hälfte der angelegten Wechselspannung abgibt, wenn sich der Kern in der Mittelstellung befindet; bei einem Hub des Kerns ist die abgenommene Spannung entsprechend dem Verschiebeweg und der Verschieberichtung größer oder kleiner. Man verwendet Wechselspannungen von einigen kHz und erzeugt diese durch einen Oszillator. Das abgenommene, wegproportionale Wechselspannungssignal wird richtungsabhängig gleichgerichtet und durch ein Filter geglättet.

Nachteilig an den bekannten induktiven Wegsensoren ist die Größe der notwendigen Baulänge im Verhältnis zum nutzbaren Verschiebeweg des Spulenkerns. Ein weiterer Nachteil besteht darin, daß der Anker aus zwei Teilen aufgebaut sein muß, nämlich den Spulenkern, der symmetrisch zu den Spulen in der Mittellage angeordnet sein muß, und der Hubstange, welche die Lage des Spulenkerns nach außen vermittelt.

Der Erfindung liegt die Aufgabe zugrunde, einen induktiven Wegsensor anzugeben, der einfach aufgebaut ist und mit einer geringeren Baulänge im Verhältnis zum nutzbaren Hub auskommt als dies beim Differentialtransformator oder der Differentialdrossel als induktiver Wegsensor möglich war.

Ausgehend von dem eingangs beschriebenen Aufbau eines induktiven Wegsensors wird die Aufgabe dadurch gelöst, daß die Stromzuführungsanordnung einen Regelkreis enthält, der den durch die Spuleneinrichtung fließenden Wechselstrom konstant hält, und daß die Meßanordnung mit hoher Eingangsimpedanz an die Spuleneinrichtung zum Abgriff der sich entwickelnden Spannung als dem Meßsignal angeschlossen ist, das vom Hub (Verschiebeweg) des Ankers abhängt.

Der induktive Wegsensor beruht auf dem Tauchankerprinzip. Taucht man den permeablen Kern in die Spuleneinrichtung, so vergrößert sich deren Induktivität, was mit einer Impedanzänderung einhergeht. Dadurch würde sich der durch die Spuleneinrichtung fließende Strom ändern, was jedoch durch einen Regelkreis verhindert wird. Durch die Spuleneinrichtung fließt demnach ein konstanter Strom, und dieser führt infolge der Impedanzänderung zu einer entsprechenden Änderung der an der Spuleneinrichtung abgegriffenen Meßspannung. Die Änderung ist in weiten Bereichen der Eintauchtiefe des Ankers in die Spuleneinrichtung konstant; lediglich bei geringer Eintauchtiefe und bei Erreichen der Sättigung infolge vollständiger Ausfüllung des Spuleninneren durch den Anker tritt eine stärkere Abweichung von der Linearität ein. Durch entsprechende Maßnahmen kann dafür gesorgt werden, daß der Hub des Ankers beschränkt ist, so daß diese nichtlinearen Bereiche für die Wegmessung unbenutzt bleiben.

Zum Abgriff der Meßspannung ist es vorteilhaft, wenn die Spuleneinrichtung eine bifilare Wicklung enthält, die aus einer Primärwicklung und einer Sekundärwicklung besteht, welche als Transformator geschaltet sind. Der konstante Wechselstrom wird der Primärwicklung zugeführt,und an der Sekundärwicklung wird die induzierte Spannung als Meßsignal abgenommen. Durch den bifilaren Wicklungsaufbau erhält man das Übersetzungsverhältnis 1:1 zwischen Primärwicklung und Sekundärwicklung. Die Kopplung ist angenähert 1 und unabhängig von den verwendeten Materialien. Zwar ist der Innenwiderstand der Primärwicklung temperaturabhängig, dies wird aber wegen des Spannungsabgriffs über die bifilar gewickelte und somit identisch ausgebildete Sekundärwicklung kompensiert. Die Meßspannung ist somit weitgehend unabhängig von Temperatureinflüssen. Der Wegsensor ist auch gegenüber magnetischen Störfeldern wenig empfindlich.

Bei dem erfindungsgemäßen induktiven Wegsensor bewegt sich das Ende des Tauchankers oder Spulenkerns um die Mitte des homogenen Magnetfeldes, welches sich im Spuleninneren ausbildet. Der Hub des Tauchankers wird auf den Nutzbereich begrenzt, in welchem die Meßspannung innerhalb der jeweils zugelassenen Grenze (von z.B. ± 10 %) proportional zum Hub ist. Entsprechende Anschläge begrenzen den Hub des Tauchankers. Die eine Bereichsgrenze wird beim Eintritt des Tauchankers um ein gewisses Maß in die Spuleneinrichtung gebildet, d. h. der Tauchanker kann nicht weiter aus dem Spuleninneren herausgezogen werden. Die andere Bereichsgrenze wird beim Ausfüllen der Spuleneinrichtung durch den Tauchanker abzüglich eines gewissen Maßes gebildet, d. h. der Tauchanker kann das Spuleninnere gerade nicht ganz ausfüllen.

Um den durch die Spuleneinrichtung fließenden Wechselstrom konstant zu halten, liegen der Oszillator, die Spuleneinrichtung und ein Stromfühlwiderstand in Reihe, es wird an dem Stromfühlwiderstand eine Spannung abgegriffen, die einer Präzisionsgleichrichter- und Verstärkerschaltung mit Glättungsglied zugeführt wird, und woraus eine Regelspannung gebildet wird, welche den Ausgangsstrom des Oszillators steuert. Diese Regelschaltung spricht sehr rasch auf eine Änderung der Lage des Spulenkerns an und regelt den Oszillatorstrom nach, so daß dieser wieder den gewünschten konstanten Wert einnimmt, wodurch die wegproportionale Messung ermöglicht wird.

Vorteilhaft ist im Sekundärkreis eine auf die Oszillatorfrequenz abgestimmte Bandfilter-Verstärker- und Gleichrichter-Schaltung vorgesehen. Ferner wird das Ausgangssignal des Gleichrichters über einen Tiefpaß einem Spannungs-Strom-Wandler zugeführt, so daß eine entsprechende Anzeige in einem Anzeigegerät ermöglicht wird.

Die Erfindung bezieht sich auch auf ein Verfahren zur induktiven Wegmessung und ist durch folgende Maßnahmen gekennzeichnet:

Ein Tauchanker wird mit seinem Ende um die Mitte einer Spuleneinrichtung bewegt, wobei das Tauchankerende einen gewissen Abstand von den Enden der Spuleneinrichtung einhält;

die Spuleneinrichtung wird mit konstantem Wechselstrom vorbestimmter Frequenz erregt;

an der Spuleneinrichtung wird eine Spannung abgenommen, deren Größe ein Maß für die Lage des Tauchankers innerhalb der Spuleneinrichtung und damit ein Maß des zurückgelegten Weges ist.

Ein Ausführungsbeispiel der Erfindung wird anhand der Zeichnung beschrieben. Dabei zeigt:

Fig. 1 einen Längsschnitt durch den induktiven Wegsensor,
Fig. 2 ein Spannungs-Weg-Diagramm,
Fig. 3 ein Blockschaltbild des Wegsensors und
Fig. 4 eine ausgeführte Schaltung für den Wegsensor.

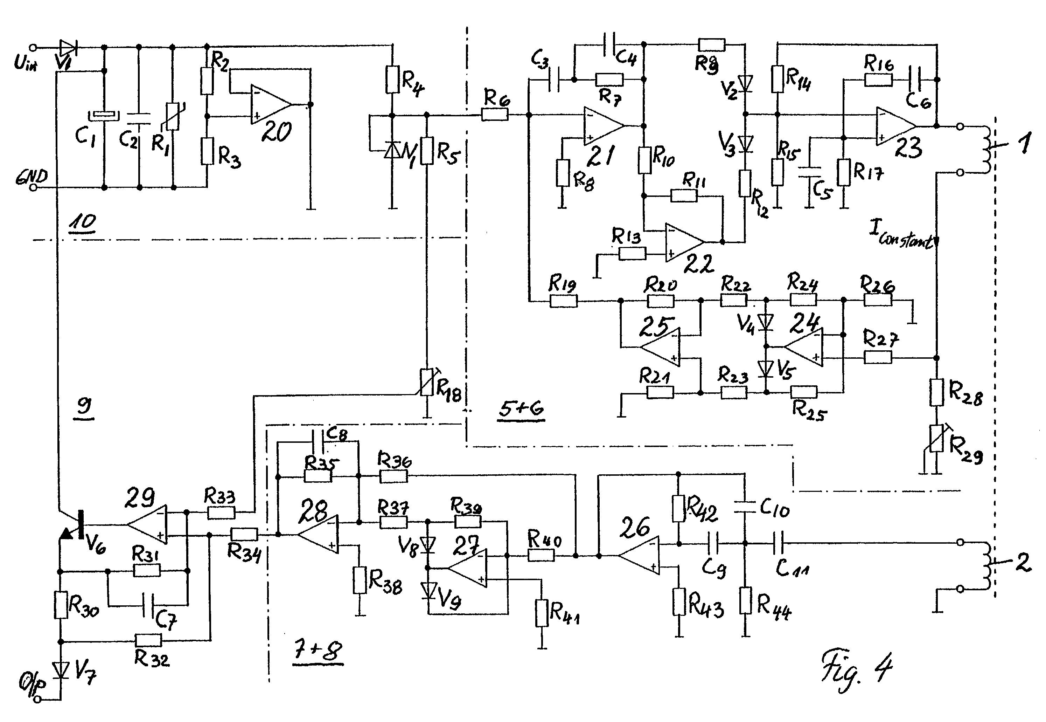

Es wird zunächst auf Fig. 3 Bezug genommen. Eine Primärwicklung 1 und eine Sekundärwicklung 2 bilden eine Spuleneinrichtung, in deren Innerem ein Spulenkern 3 bewegbar ist. Die Spuleneinrichtung 1, 2 wird über einen Oszillator 5 mit 5 kHz Wechselspannung erregt, wobei durch einen Regelkreis 6 dafür gesorgt wird, daß der Erregungsstrom der Spuleneinrichtung 1, 2 konstant ist. Je nach der Lage des Spulenkerns 3 relativ zur Spuleneinrichtung 1, 2 ändert sich die Spannung an den Klemmen der Primärwicklung 1 , und zwar ist die Abhängigkeit recht gut linear proportional , wenn der Spulenkern 3 mit seinem vorderen Ende 3a sich in einem Bereich um die Mitte der Spule 1 bewegt. Die Spannung an der Primärwicklung 1 kann mit Hilfe der Sekundärwicklung 2 abgenommen und einer Meßanordnung zugeführt werden, die eine Präzisionsgleichrichterschaltung 7, Filter 8 und gegebenenfalls einen Spannungsstromwandler 9 aufweist. Die Schaltungsteile 5 bis 9 werden über eine Stromversorgungseinrichtung 10 versorgt, die den Eingangsstrom auf den für die Komponenten passenden Wert bringt und den Strom diesen Komponenten zuführt, ohne daß dies im einzelnen gezeigt ist.

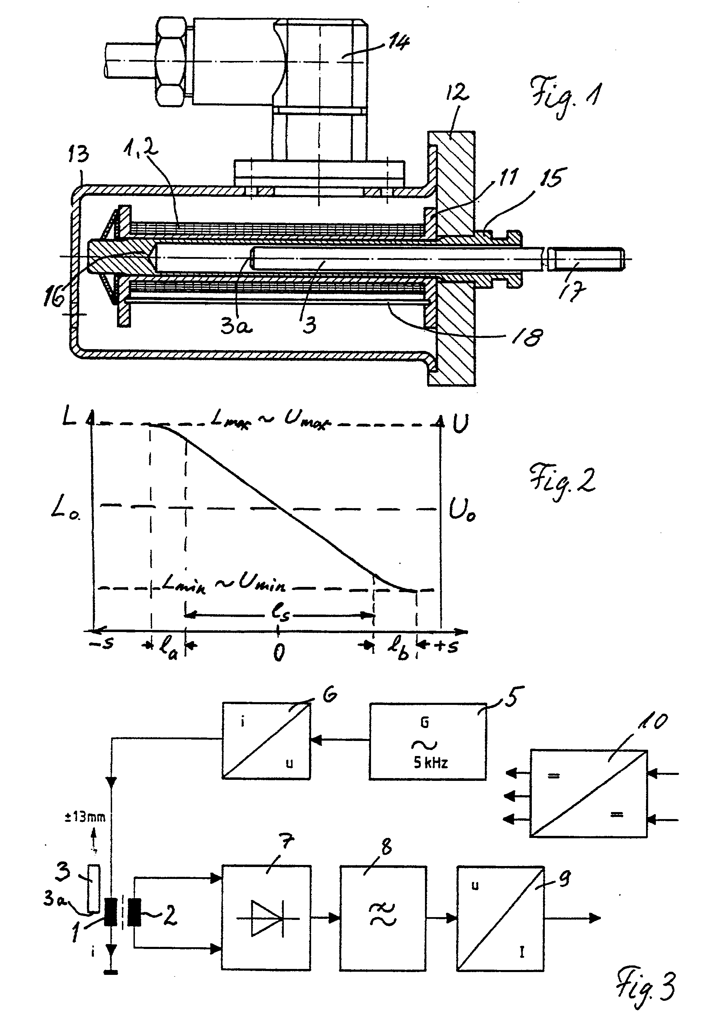

Fig. 1 zeigt den körperlichen Aufbau des induktiven Wegsensors. Zum Erhalt der Primärwicklung 1 und der Sekundärwicklung 2 ist die Spuleneinrichtung bifilar gewickelt, wodurch man eine Kopplung nahezu 1 erhält, die unabhängig von Materialeigenschaften ist. Das Übersetzungsverhältnis beträgt 1 : 1.

Die bifilare Wicklung 1, 2 ist in einem Spulenkörper 11 untergebracht, der an einem Gehäuseflansch 12 befestigt ist. Auf dem Gehäuseflansch 12 ist ein Gehäusemantel 13 angebracht, der die zylindrische Spuleneinrichtung 1, 2 mit gewissen Abstand umgibt und einen Stecker 14 trägt, durch welchen die elektrischen Anschlüsse zu- und abgeführt werden. Zur Abdichtung des Gehäuseinneren ist ein Druckrohr 15 vorgesehen, welches an seinem inneren Ende einen Anschlag 16 für den Spulenkern 3 aufweist, der das Vorderteil eines stangenförmigen Ankers 17 ist. (Der Anker 17 mit seinem vorderen, den Spulenkern 3 bildenden Ende kann aus einem einzigen Stück bestehen.) Innerhalb des Gehäuses 12, 13 kann noch eine Elektronikkarte 18 untergebracht sein, auf welcher die hauptsächlichste Regelelektronik untergebracht wird.

Fig. 2 zeigt ein Diagramm der Induktivität L bzw. der Meßspannung U über dem positiven und negativen Hub S des Spulenkerns 3. Je nach der Lage des Spulenkerns 3 kann eine maximale Induktivität $L_{max}$ oder eine minimale Induktivität $L_{min}$ erreicht werden und demgemäß eine maximale Signalspannung $U_{max}$ und eine minimale Signalspannung $U_{min}$ Die Charakteristik ist in ihrem mittleren Bereich $l_s$ weitgehend linear und biegt in den äußeren Bereichen $l_a$ bzw. $l_b$ zur Waagrechten ab. Im Nutzbereich $l_s$ ist eine Abweichung gegenüber der Proportionalität von z. B. ± 10 % zugelassen, die Bereichsgrenzen können aber auch ± 20 % oder ± 5 % zulassen.

Für einen nutzbaren Hub von ± 13 mm (Gesamthub $l_s$ = 26 mm) wird eine Spulenlänge $l_a$ + $l_s$ + $l_b$ von 38 mm benötigt. Für einen Wegsensor mit Differentialtransformator würde bei einem Hub von ± 13 mm eine Länge von 60 mm für die Spulen benötigt werden und bei einer Differentialdrossel eine Länge von 52 mm.

In Fig. 4 ist ein Schaltungsbeispiel für den induktiven Wegsensor dargestellt, wobei die Blöcke in Fig. 3 durch strichpunktierte Grenzlinien angedeutet sind.

Am Stromversorgungsblock 10 wird die Eingangsspannung $U_{in}$ gegenüber Erde GND über eine Diode V1 zugeführt und über Kondensatoren C1, C2 sowie einen Überspannungsschutz R1 auf möglichst gleichbleibender Höhe gehalten. Ein Operationsverstärker 20 ist mit seinem positiven Eingang an einem durch zwei Widerstände R2 und R3 gebildeten Spannungsteiler angeschlossen, während der negative Eingang mit dem Ausgang und Masse verbunden ist, so daß die Masse auf bestimmter Spannung zwischen $U_{in}$ und GND, beispielsweise auf halber Spannung, gehalten wird. Über einen weiteren Widerstand R4 und eine Zenerdiode N1 wird ein genaues Potential eingehalten, welches für die Einstellung weiterer Operationsverstärker benötigt wird.

Die Stromzuführungsanordnung 5 + 6 enthält fünf Operationsverstärker 21 bis 25, die mit ihrer Beschaltung unter Einbezug der Primärwicklung 1 und eines Stromfühlwiderstandes R28, R 29 zu einem Regelkreis geschaltet sind. Der negative Eingang des Operationsverstärkers 21 ist mit der Potentialquelle R4/N1 über einen Reihenwiderstand R6 verbunden, während ein Widerstand R8 den positiven Eingang mit Masse verbindet. Der Ausgang des Operationsverstärkers 21 ist mit dem negativen Eingang über RC-Glieder, gebildet aus Kondensatoren C3 und C4 und einem Widerstand R7, rückgekoppelt; ferner wird ein Strommeßsignal über einen Widerstand R19 zugeführt. Das Strommeßsignal wird mittels einer Präzisionsgleichrichterschaltung unter Einbezug des Operationsverstärkers 24, der Widerstände R24 bis R27 und der Gleichrichter V4 und V5 sowie eines Verstärkers unter Einbezug des Operationsverstärkers 25 und der Widerstände R20 bis R23 gebildet, wobei der Spannungsabfall an den Widerständen R28 + R29 gegenüber Masse abgetastet, gleichgerichtet und verstärkt wird.

Der Oszillator 5 wird im wesentlichen durch den Operationsverstärker 23 und die RC-Glieder C5, R17 und C6, R16 gebildet, die den positiven Eingang mit Masse bzw. mit dem Ausgang des Operationsverstärkers 23 verbinden. Der negative Eingang des Operationsverstärkers 23 ist mit einem Spannungsteiler R14, R15 sowie mit dem Ausgang des Operationsverstärkers 21 verbunden, wobei ein Koppelnetzwerk mit den Widerständen R9 bis R13, dem Operationsverstärker 22 und den Gleichrichtern V2 und V3 gebildet wird.

Wenn der über die Primärwicklung 1 und die Widerstände R28, R29 fließende Strom von seinem Sollwert abweicht, erfolgt eine Regelung über die Kette der Operationsverstärker 24, 25, 21, 22 dahingehend, daß der Operationsverstärker 23 so gesteuert wird, daß die Fehlerabweichung wieder beseitigt wird, d. h. daß ein konstanter Strom geliefert wird.

Die in der Primärwicklung 1 abfallende Spannung wird mit Hilfe der Sekundärwicklung 2 abgetastet. Die Meßspannung wird den Eingängen eines Operationsverstärkers 26 zugeführt, dessen negativer Eingang über ein Bandfilter, gebildet aus Kondensatoren C9, C10, C11 und Widerständen R42, R44 mit der einen Klemme der Sekundärwicklung 2 verbunden ist, während die andere Klemme über Masse und einen Widerstand R43 mit dem positiven Eingang des Operationsverstärkers 26 verbunden ist. Der Ausgang dieser Filterschaltung ist mit einer Präzisionsgleichrichterschaltung verbunden, enthaltend einen Operationsverstärker 27 , Gleichrichter V8, V9 und Widerstände R39 bis R 41. Ein weiterer Operationsverstärker 28 mit seiner Beschaltung aus einem Kondensator C8 und Widerständen R35 bis R38 dient zur weiteren Glättung des Meßsignals.

In dem Spannungsstromwandler 9 erfolgt eine Umsetzung der Meßspannung in einen Meßstrom, der sich besser zur Anzeige eignet. Im einzelnen ist ein Operationsverstärker 29 und ein Leistungstransistor V6 vorgesehen, die über Widerstände R30 bis R32 und einen Kondensator C7 miteinander gekoppelt sind. Die vom Operationsverstärker 28 abgegebene Meßspannung wird über einen Widerstand R34 dem positiven Eingang des Operationsverstärkers 29 zugeführt. Zu Korrekturzwecken wird dem negativen Eingang eine Offset-Spannung zugeführt, die von dem Potential bei R4 / N1 über einen Widerstand R5 abgenommen und an einem Spannungsteilerwiderstand R18 eingestellt sowie über einen Widerstand R33 zugeführt wird. Der Operationsverstärker 29 steuert den Transistor V6, in dessen Ausgangskreis außer dem Widerstand R30 noch ein Gleichrichter V7 sich befindet. Der Anzeigestrom kann zwischen der Klemme O/P und Erde GND entnommen werden.

Die dargestellte und beschriebene Schaltung hat den besonderen Vorzug, auf Temperatureinflüsse wenig zu reagieren. Auch die Einflüsse magnetischer Störungen sind gering. Dabei kann das Gehäuse 12, 13 ferro- oder paramagnetisch sein, das Druckrohr 15 ist paramagnetisch, und die Teile 11, 14 bestehen (weitgehend) aus Kunststoff. Der Tauchanker 17 ist ferromagnetisch mit möglichst kleiner Temperaturtrift.

**Patentansprüche**

1. Induktiver Wegsensor
mit einer zylindrischen Spuleneinrichtung (1, 2),
mit einem permeablen Spulenkern (3) als verschiebbarem Anker (17) im Inneren der Spuleneinrichtung,
mit einer Stromzuführungsanordnung (5, 6), die einen Oszillator (5) zur Abgabe von Wechselstrom bestimmter Frequenz an die Spuleneinrichtung (1, 2) enthält, und
mit einer Meßanordnung (7, 8, 9), die das gemessene Signal gleichrichtet und zur Anzeige bringt,
**gekennzeichnet durch** folgende Merkmale:
die Stromzuführungsanordnung (5, 6) enthält einen Regelkreis (6), der den durch die Spuleneinrichtung (1, 2) fließenden Wechselstrom konstant hält;
die Meßanordnung (7, 8, 9) ist mit hoher Eingangsimpedanz an die Spuleneinrichtung (1, 2) zum Abgriff der sich entwickelnden Spannung als dem Meßsignal angeschlossen, das vom Hub, d.h. vom Verschiebeweg, des Ankers (17) abhängt.

2. Wegsensor nach Anspruch 1,
dadurch gekennzeichnet, daß die Spuleneinrichtung (1, 2) eine bifilare Wicklung enthält, die aus einer Primärwicklung (1) und einer Sekundärwicklung (2) besteht, welche als Transformator geschaltet sind,
daß der konstante Wechselstrom der Primärwicklung (1) zugeführt und
daß an der Sekundärwicklung (2) die induzierte Spannung als Meßsignal abgenommen wird.

3. Wegsensor nach Anspruch 1 oder 2,
dadurch gekennzeichnet, daß der Hub des Ankers (17) durch Anschläge (16) auf einen Nutzbereich ($l_s$) begrenzt ist, in welchem die Meßspannung innerhalb zugelassener Bereichsgrenzen proportional zum Hub ist.

4. Wegsensor nach Anspruch 3,
dadurch gekennzeichnet, daß die eine Bereichsgrenze bei Eintritt des Ankers (17) um ein gewisses Maß ($l_a$) in die Spuleneinrichtung und die andere Bereichsgrenze beim Ausfüllen der Spuleneinrichtung (1, 2) durch den Anker (17) abzüglich eines gewissen Maßes ($l_b$) gebildet werden.

5. Wegsensor nach einem der Ansprüche 1 bis 4,
dadurch gekennzeichnet, daß der Oszillator (5), die Spuleneinrichtung (1, 2) und ein Stromfühlwiderstand (R28, R29) in Reihe liegen,
daß an dem Widerstand (R28, R29) eine Spannung abgegriffen, einer Gleichrichter- und Verstärkerschaltung (24, 25, R19-R27, V4, V5) sowie einer Koppelschaltung (21, 22, R6-R13; C2, C3, V2, V3) zugeführt wird, welche den Ausgangsstrom des Oszillators (5) steuert.

6. Wegsensor nach einem der Ansprüche 1 bis 5, dadurch gekennzeichnet, daß im Meßkreis (7, 8, 9) ein auf die Oszillatorfrequenz abgestimmtes Bandfilter (26, R42-R44, C9-C11) und eine Verstärker- und Gleichrichterschaltung (27, 28, R35-R41, V8, V9, C8) mit Glättungsverhalten vorgesehen sind und

daß das Spannungs-Ausgangssignal dieser Schaltungen einem Spannungs-Strom-Wandler (9) zugeführt wird.

7. Verfahren zur induktiven Wegmessung mit folgenden Maßnahmen:
ein Tauchanker (17) wird mit seinem Ende (3a) in der Mitte einer Spuleneinrichtung (1, 2) bewegt, wobei das Tauchankerende (3a) einen gewissen Abstand ($l_a$, $l_b$) von dem jeweiligen Ende der Spuleneinrichtung (1, 2) einhält;
die Spuleneinrichtung (1, 2) wird mit konstantem Wechselstrom vorbestimmter Frequenz erregt;
an der Spuleneinrichtung (1, 2) wird eine Spannung abgenommen, deren Größe ein Maß für die Lage des Tauchankers (17) innerhalb der Spuleneinrichtung (1, 2) und damit ein Maß des zurückgelegten Weges ist.

**Claims**

1. An inductive travel sensor having a cylindrical coil arrangement (1, 2), a permeable coil core (3) serving as a displaceable armature (17) in the interi-or of the coil arrangement, a power supply arrangement (5, 6) which includes an oscillator (5) for supplying alternating current of specific frequency to the coil arrangement (1, 2), and a measuring arrangement (7, 8, 9) which rectifies and indicates the measured signal, characterised by the following features: the power supply arrangement (5, 6) includes a control loop (6) which maintains the alternating current flowing through the coil arrangement (1, 2) constant:
the measuring arrangement (7, 8, 9) is connected with high input impedance to the coil arrangement (1, 2) for tapping the developing voltage as the measuring signal which depends upon the stroke, that is, the displacement travel, of the armature (17).

2. A travel sensor as claimed in claim 1, characterised in that the coil arrangement (1, 2) comprises a bifilar winding comprising a primary winding (1) and a secondary winding (2) which are connected as a transformer, that the constant alternating current is fed to the primary winding (1), and that the induced voltage is tapped as a measuring signal from the secondary winding (2).

3. A travel sensor as claimed in claim 1 or 2, char-acterised in that the stroke of the armature (17) is limited by stops (16) to a useful range ($l_s$) in which the measuring voltage is proportional to the stroke within permitted range limits.

4. A travel sensor as claimed in claim 3, characterised in that one range limit is formed upon entry of the armature (17) to a certain extent ($l_s$) into the coil arrangement, and the other range limit is formed upon the filling of the coil arrangement (1, 2) by the armature (17) less a certain amount ($l_b$).

5. A travel sensor as claimed in one of the claims 1 to 4, characterised in that the oscillator (5), the coil arrangement (1, 2) and a current-sensing resistor (R28, R29) are connected in series, that a voltage is tapped from the resistor (R28, R29) and is fed to rectifier- and amplifier circuit (24, 25, R19 to R27, V4, V5) and to a coupling circuit (21, 22, R6 to R13; C2, C3, V2, V3) which controls the output current of the oscillator (5).

6. A travel sensor as claimed in one of the claims 1 to 5, characterised in that a band-pass filter (26, R42 to R44, C9 to C11) tuned to the oscillator frequency and an amplifier- and rectifier circuit (27, 28, R35 to R41, V8, V9, C8) having a smoothing action are provided in the measuring circuit (7, 8, 9), and that the voltage output signal of these circuits is fed to a voltage-current converter (9).

7. A method of inductive travel measurement by the following measures:
the end (3a) of a plunger-type armature (17) is moved in the centre of a coil arrangement (1, 2), wherein the end (3a) of the plunger-type armature observes a certain distance ($l_a$, $l_b$) from the respective end of the coil arrangement (1, 2);
the coil arrangement (1, 2) is energized by constant alternating current of predetermined frequency;
a voltage whose value is indicative of the position of the plunger-type armature (17) within the coil arrangement (1, 2), and hence indicative of the distance travelled, is tapped from the coil arrangement (1, 2).

**Revendications**

1. Capteur inductif de déplacement, comportant ensemble de bobines cylindrique pourvu d'un noyau perméable qui est agencé comme une armature déplaçable à l'intérieur de l'ensemble de bobines, un dispositif d'alimentation en courant qui comporte un oscillateur servant à fournir un courant alternatif d'une fréquence déterminée à l'ensemble de bobines et un dispositif de mesure, qui redresse le signal mesuré et qui assure son affichage, caractérisé par les particularités suivantes: le dispositif d'alimentation en courant (5, 6) contient un circuit de régulation (6) qui maintient constant le courant passant dans l'ensemble de bobines (1, 2); le dispositif de mesure (7, 8, 9) est relié avec une grande impédance d'entrée à l'ensemble de bobines (1, 2) pour la prise de la tension à produire comme signal de mesure, qui est fonction de la course, c'est-à-dire de la distance de déplacement, de l'armature (17).

2. Capteur de déplacement selon la revendication 1, caractérisé en ce que l'ensemble de bobines (1, 2) contient un enroulement bifilaire, qui se compose d'un enroulement primaire (1) et d'un enroulement secondaire (2) qui sont agencés comme un transformateur, en ce que le courant alternatif constant est appliqué à l'enroulement primaire (1) et en ce que la tension induite servant de signal de mesure est prise à l'enroulement secondaire (2).

3. Capteur de déplacement selon une des revendications 1 ou 2, caractérisé en ce que la course de l'armature (17) est limitée par des butées (16) à un domaine utile ($l_s$), dans lequel la tension de mesure est proportionnelle à la course, à l'intérieur de limites admises pour le domaine précité.

4. Capteur de déplacement selon la revendication 3, caractérisé en ce qu'une des limites dudit domaine est établie lors de la pénétration de l'armature (17) d'une certaine distance ($l_a$) dans l'ensemble de bobines tandis que l'autre limite dudit domaine est établie lorsque l'armature (17) remplit le volume intérieur, diminué d'une certaine dimension ($1_b$), de l'ensemble de bobines.

5. Capteur de déplacement selon une des revendications 1 à 4, caractérisé en ce que l'oscillateur (5), l'ensemble de bobines (1, 2) et une résistance de captage de courant (R28, R29) sont disposés en série, en ce qu'une tension est prise à la résistance (R28, R29) et est appliquée à un circuit redresseur et amplificateur (24, 25, R19–R27, V4, V5) ainsi qu'à un circuit de couplage (21, 22, R6–R13; C2, C3, V2, V3) qui commande le courant de sortie de l'oscillateur (5).

6. Capteur de déplacement selon une des revendications 1 à 5, caractérisé en ce qu'il est prévu dans le circuit de mesure (7, 8, 9) un filtre à bande passante (26, R42–R44, C9–C11) accordé sur la fréquence de l'oscillateur ainsi qu'un circuit amplificateur et redresseur (27, 28, R35–R41, V8, V9, C8) ayant un comportement de filtrage et en ce que le signal de tension sortant desdits circuits est appliqué à un convertisseur tension-courant (9).

7. Procédé de mesure inductive de déplacement ayant les particularités suivantes:

– une armature de plongée (17) est déplacée avec son extrémité (3a) au milieu d'un ensemble de bobines (1, 2), l'extrémité (3a) de l'armature de plongée maintenant un certain espacement ($l_a$, $l_b$) par rapport à l'extrémité correspondante de l'ensemble de bobines (1, 2);

– l'ensemble de bobines (1, 2) est excité avec un courant alternatif constant d'une fréquence prédéterminée;

– une tension est prise à l'ensemble de bobines (1, 2), la grandeur de cette tension constituant une mesure de la position de l'armature de plongée (17) à l'intérieur de l'ensemble de bobines (1, 2) et par conséquent une mesure de la course effectuée.

Fig. 1

Fig. 2

Fig. 3